# EUROPÄISCHE PATENTSCHRIFT

(11) **EP 1 454 076 B1**
(45) Veröffentlichungstag und Bekanntmachung des Hinweises auf die Patenterteilung: **16.01.2008**
(21) Anmeldenummer: 02774667.6
(22) Anmeldetag: 30.09.2002
(51) Int. Cl.: F16D 55/2265, F16D 65/097

(54) **SCHWIMMSATTEL-SCHEIBENBREMSE FÜR EIN KRAFTFAHRZEUG**
FLOATING CALIPER DISK BRAKE FOR A MOTOR VEHICLE
FREIN A DISQUE A ETRIER FLOTTANT POUR VEHICULE AUTOMOBILE

(30) Priorität: 30.11.2001 DE 10158672
(43) Veröffentlichungstag der Anmeldung: 08.09.2004
(73) Patentinhaber: Continental Teves AG & Co. oHG, 60488 Frankfurt am Main (DE); Thiel, Rudolf, 60488 Frankfurt (DE); Ungethüm, Ulrich, 63179 Obersthausen (DE); Heinz, Stefan, 65817 Eppstein (DE)
(72) Erfinder: THIEL, Rudolf, 60488 Frankfurt (DE); UNGETHÜM, Ulrich, 63179 Obertshausen (DE); HEINZ, Stefan, 65817 Eppstein (DE)
(86) Internationale Anmeldenummer: PCT/EP2002/010930
(87) Internationale Veröffentlichungsnummer: WO 2003/046401

(56) Entgegenhaltungen:
- GB-A- 2 046 855
- US-A- 3 942 611

## Beschreibung

Die Erfindung betrifft eine Schwimmsattel-Scheibenbremse für ein Kraftfahrzeug mit einem achsfesten Halter, an dem ein Schwimmsattel mittels einer einzigen Bolzenführung verschiebbar sowie um die Achse der Bolzenführung schwenkbar gelagert ist.

Aus der GB 2 133 489 A ist eine derartige Schwimmsattel-Scheibenbremse bekannt, wobei die Schwenkbewegung des Schwimmsattels um die Bolzenführungsachse durch seitliche Abstützung des Schwimmsattels an Schultern des Halters begrenzt ist. Der Schwimmsattel übergreift seinerseits eine Bremsscheibe sowie beiderseits der Bremsscheibe angeordnete Bremsbeläge, die bei Bremsbetätigung in Reibanlage mit der Bremsscheibe geraten. Zur Übertragung der auftretenden Bremsumfangskräfte sind beide Bremsbeläge am Schwimmsattel verschiebbar geführt und in Umfangsrichtung abgestützt. Dazu sind die Bremsbeläge mittels eines zentralen Haltestiftes im Schwimmsattel fixiert und verschiebbar geführt. Die Übertragung der Bremsumfangskräfte erfolgt durch Anlage der Bremsbeläge an seitlich im Schwimmsattel befestigten Abstützbolzen. Damit werden die an beiden Bremsbelägen anliegenden Bremsumfangskräfte unter Zwischenschaltung der Abstützbolzen über den Schwimmsattel übertragen. Dies erfordert eine sehr stabile Konstruktion des Schwimmsattels bzw. der Abstützbolzen, was grundsätzlichen Bestrebungen nach Gewichtseinsparungen zuwiderläuft. Darüber hinaus neigt die beschriebene Konstruktion der Schwimmsattel-Scheibenbremse aufgrund unzureichender Elastizitäten zur Entstehung unerwünschter Klappergeräusche.

Dokument US 3 942 611 A offenbart eine Schwimmsattel-Scheibenbremse gemäß dem Oberbegriff des Anspruchs 1.

Ausgehend davon ist es die Aufgabe der Erfindung eine Schwimmsattel-Scheibenbremse mit nur einer Bolzenführung für den Schwimmsattel anzugeben, die eine verbesserte Führung und Abstützung des Schwimmsattels sowie der Bremsbeläge ermöglicht und gleichzeitig eine gewichtssparende Konstruktion zulässt.

Gelöst wird diese Aufgabe durch eine Schwimmsattel-Scheibenbremse für ein Kraftfahrzeug nach Patentanspruch 1. Danach umfasst die Schwimmsattel-Scheibenbremse einen achsfesten Halter, einen mittels genau einer Bolzenführung verschiebbar am Halter gelagerten Schwimmsattel, der um eine Achse der Bolzenführung schwenkbar angeordnet ist, wobei der Schwimmsattel in Umfangsrichtung am Halter abgestützt ist, und beiderseits einer Bremsscheibe angeordneten Bremsbeläge. Zur Vereinfachung der Schwimmsattel- wie auch der Bremsbelagführung ist ein erster Bremsbelag am Halter verschiebbar geführt sowie abgestützt und ein zweiter Bremsbelag am Schwimmsattel abgestützt. An Halter sind Haltearme angeformt, welche die Bremsscheibe axial überragen, und an einer axialen Außenseite des Schwimmsattels Vorsprünge angeformt sind, die mit den Haltearmen zusammenwirken. Damit wird ein Teil der Bremsumfangskräfte über den Schwimmsattel auf den achsfesten Halter übertragen. Die Übertragung der gesamten Bremsumfangskräfte wird demnach auf mehrere Kraftübertragungswege aufgeteilt und erlaubt dadurch insbesondere für den Halter und den Schwimmsattel eine gewichtssparend "schlanke" Gestaltung. Außerdem ergibt sich durch die schwenkbare Anordnung eine statisch bestimmte Lagerung des Schwimmsattels am Halter. Diese Art der Lagerung ist besonders toleranzunempfindlich und verhindert gleichzeitig ein Verklemmen des Schwimmsattels unter Umfangslast innerhalb der Bolzenführung bzw. am Halter.

Eine vorteilhafte Weiterentwicklung der Schwimmsattel-Scheibenbremse ergibt sich dadurch, dass der Schwimmsattel in Umfangsrichtung zumindest einseitig mittels einer Feder gegenüber dem Halter verspannt ist. Damit werden unerwünschte Klappergeräusche während des Bremsbetriebes unterbunden. Die Feder wirkt bezogen auf die Bremsscheibenachse im wesentlichen sowohl in radialer Richtung als auch in Umfangsrichtung und ist insbesondere am Halter befestigt. Die besten Ergebnisse lassen sich mit mehreren Federn auf beiden Halterseiten in Umfangsrichtung erzielen.

Eine bevorzugte Ausführung der Schwimmsattel-Scheibenbremse lässt sich dadurch erreichen, dass an der Feder Anlageflächen zur Führung und Abstützung des Schwimmsattels ausgebildet sind. Dabei ist der Schwimmsattel über die multifunktionale Feder am Halter abgestützt und geführt. Die Feder bildet somit eine Zwischenlage und verhindert eine direkte Berührung des Schwimmsattels mit dem Halter. Bei entsprechender Federgestaltung verhindert dies die Entstehung von Korrosion zwischen Schwimmsattel und Halter eröffnet grundsätzlich die Verwendung unterschiedlicher Materialien für Halter und Schwimmsattel. Die Feder kann auf einfachem Wege gezielt auf gute Gleiteigenschaften an ihrer Oberfläche ausgelegt werden und demnach die Schwimmsattelführung verbessern.

Eine sinnvolle Ausführungsform der beschriebenen Schwimmsattel-Scheibenbremse sieht vor, dass die Feder den ersten Bremsbelag gegenüber dem Halter verspannt. Hierbei handelt es sich um den mit einer Betätigungsvorrichtung des Schwimmsattels zusammenwirkenden Bremsbelag, der fahrzeugbezogen üblicherweise auf der axialen Innenseite angeordnet ist. Dabei kann sowohl eine separate Feder vorhanden sein, die nur den ersten Bremsbelag mit dem Halter verspannt, als auch eine kombinierte Feder die den ersten Bremsbelag und den Schwimmsattel gegenüber dem Halter verspannt. Eine solche kombinierte Feder reduziert vorteilhaft den Bauteilaufwand. In Erweiterung dieser Multifunktionalität sind an der Feder zusätzlich Anlageflächen zur Führung und Abstützung des ersten Bremsbelages ausgebildet sind. Damit wird auch die Bremsbelagführung verbessert, indem sich die Feder zumindest mit einem Abschnitt zwischen dem Bremsbelag und dem Halter erstreckt.

Weitere sinnvolle Detailmerkmale der Erfindung sind dem Ausführungsbeispiel in den Figuren zu entnehmen und werden im folgenden näher erläutert.

Es zeigt:

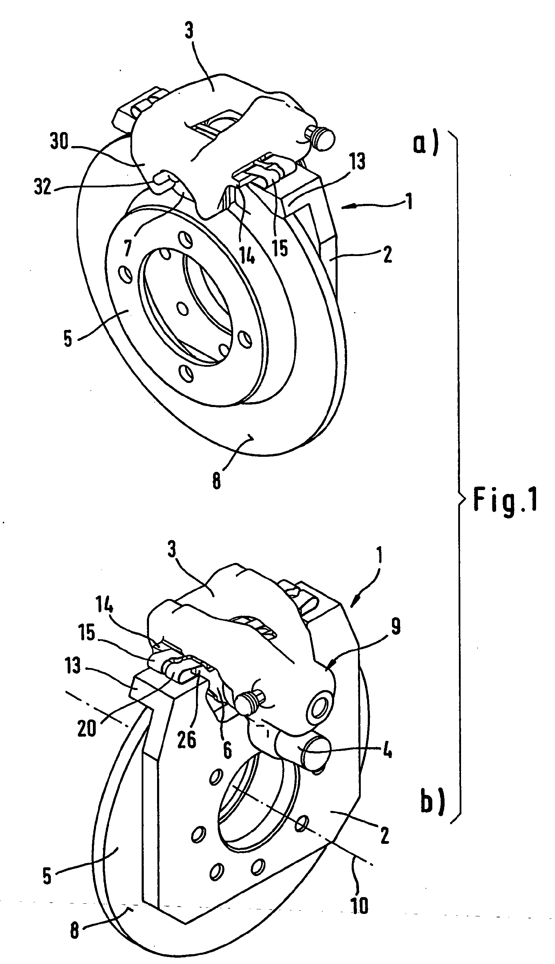

- Fig.1: zwei räumliche Ansichten einer Schwimmsattel-Scheibenbremse nur einer Bolzenführung für den Schwimmsattel und erfindungsgemäßer Abstützung sowie Führung mittels Federn;
- Fig.2: drei weitere Ansichten der Schwimmsattel-Scheibenbremse aus Figur 1.

Die in den Figuren dargestellte Schwimmsattel-Scheibenbremse 1 für ein Kraftfahrzeug umfasst einen fahrzeugfesten Halter 2 sowie einen verschiebbar zum Halter 2 gelagerten Schwimmsattel 3. Der Halter 2 ist dabei entweder wie dargestellt fahrzeugfest verschraubt oder aber unmittelbar in einen nicht gezeigten Achsschenkel integriert.

Am Halter 2 ist über eine einzelne Bolzenführung 4 ein Schwimmsattel 3 bezogen auf die Achsrichtung einer Bremsscheibe 5 verschiebbar gelagert. Eine solche Bolzenführung 4 enthält üblicherweise einen Führungsbolzen, der entweder am Halter 2 oder Schwimmsattel 3 befestigt ist und sich verschiebbar in eine zugehörige Führungsbohrung im jeweils anderen Bauteil, d. h. Schwimmsattel 3 oder Halter erstreckt. Der Schwimmsattel 3 übergreift eine Bremsscheibe 5 sowie beiderseits der Bremsscheibe 5 angeordnete Bremsbeläge 6, 7, die bei Bremsbetätigung in Reibanlage mit einer Reibfläche 8 der Bremsscheibe 5 gebracht werden. In den Schwimmsattel 3 ist auf der fahrzeugbezogen axial innenliegenden Seite der Bremsscheibe 5 eine Betätigungsvorrichtung 9 integriert. Diese dient der direkten Beaufschlagung eines ersten Bremsbelages 6 mit einer Bremsenzuspannkraft, während der gegenüberliegende zweite Bremsbelag 7 durch Verschiebung des Schwimmsattels 3 infolge Reaktionskraft gegen die Bremsscheibe 5 gedrückt wird. In den Figuren ist ein Schwimmsattel 3 mit einer hydraulischen Betätigungsvorrichtung 9 gezeigt, wobei grundsätzlich für eine erfindungsgemäße Anordnung die Art der Zuspannung der Schwimmsattel-Scheibenbremse 1 während einer Bremsbetätigung nebensächlich ist. Alternativ kann beispielsweise auch eine elektrische, pneumatische oder mechanische Betätigungsvorrichtung 9 Verwendung finden. Es sind auch Mischformen der verschiedenartiger Betätigungsvorrichtungen denkbar, wie sie beispielsweise bei kombinierten Schwimmsattel-Scheibenbremsen zur Betriebs- sowie zur Feststellbremsbetätigung eingesetzt werden.

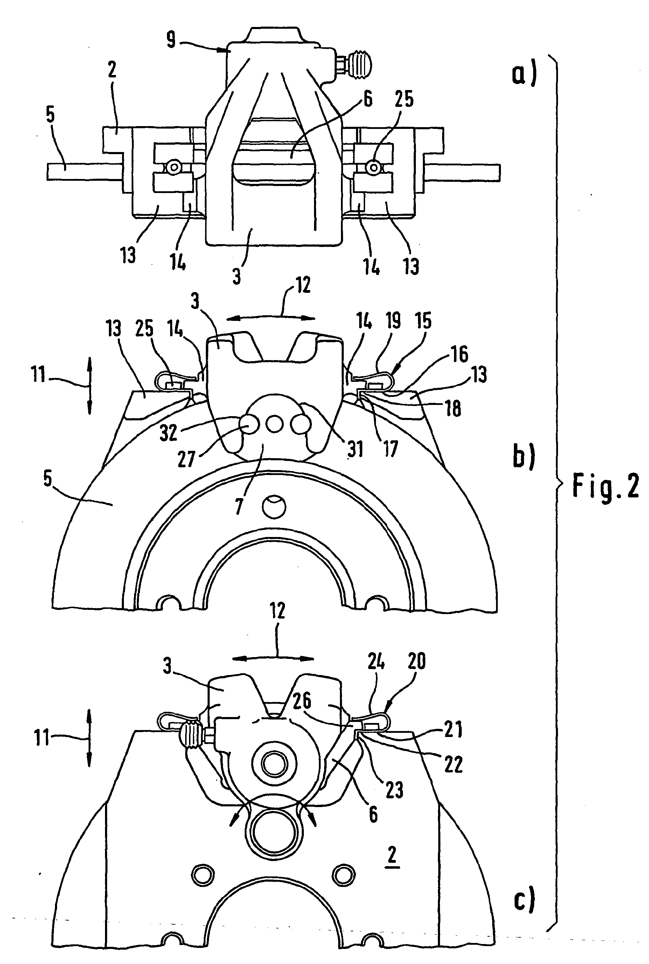

Vor allem aus Gründen der Gewichtseinsparung wurden die Anbindungsstellen des verschiebbar angeordneten Schwimmsattels 3 zum Halter 2 auf das Notwendigste reduziert. Dazu ist nur eine einzige Bolzenführung 4 vorgesehen mittels der der Schwimmsattel 3 in Zuspannrichtung bzw. parallel zur Achsrichtung 10 der Bremsscheibe 5 verschiebbar am Halter 2 gelagert ist. Damit ist der Schwimmsattel 3 um die Achse der Bolzenführung 4 schwenkbar am Halter 2 angeordnet (siehe Figur 2c). In Umfangsrichtung 12 stützt sich der Schwimmsattel 3 zur Übertragung auftretender Bremsumfangskräfte am Halter 2 ab. Dazu sind am Halter 2 Halterarme 13 angeformt, die die Bremsscheibe 5 axial überragen. Die Abstützung sowie verschiebbare Führung des Schwimmsattels 3 erfolgt neben der Bolzenführung 4 über in Umfangsrichtung 12 seitliche Vorsprünge 14, die mit den Halterarmen 13 zusammenwirken. Die Vorsprünge 14 sind dabei an der axialen Außenseite des Schwimmsattels 3 angeformt und sind sowohl in Radialrichtung 11 als auch in Umfangsrichtung 12 gegenüber den Halterarmen 13 abgestützt und geführt. Zur Verbesserung der Führungseigenschaften des Schwimmsattels 3 ist zumindest einseitig, vorzugsweise beidseitig, eine Feder 15 vorgesehen, die mit einem Befestigungsabschnitt 16 am Halterarm 13 befestigt ist. Dabei sind am Befestigungsabschnitt 16 gleichzeitig Anlageflächen 17, 18 angeformt, die sich zwischen Halterarm 13 und Schwimmsattel 3 erstrecken und der Führung sowie Abstützung des Schwimmsattels 3 dienen. Die Anlageflächen 17, 18 erleichtern damit sowohl die Abstützung des Schwimmsattels 3 in Umfangsrichtung 12 als auch dessen Führung in Achsrichtung 10. Die Anlageflächen 17, 18 wirken somit als Zwischenlage und verhindern einen direkten Kontakt von Schwimmsattel 3 und Halter 2. Dadurch wird die Verwendung unterschiedlicher Materialien für Schwimmsattel 3 und Halter 2 erleichtert und, bei Verwendung entsprechender Federwerkstoffe, die Entstehung von Korrosion erschwert. Insbesondere vereinfacht dies den Einsatz von Leichtmetallwerkstoffen, wie z. B. Aluminium, für den Schwimmsattel. Darüber hinaus umfasst die Feder 15 einen Federabschnitt 19, mit dem der Schwimmsattel 3 klapperfrei gegenüber dem Halter 2 bzw. Halterarm 13 verspannt wird. Diese klapperfrei Federvorspannung bezieht sowohl auf die Radial- 11 als auch die Umfangsrichtung 12. Die Federvorspannung verhindert somit unter Erhaltung der relativen Verschiebbarkeit zwischen Schwimmsattel 3 und Halter 2 die Entstehung unerwünschter Bremsgeräusche.

Ein weiteres Konstruktionsmerkmal, das eine gewichtssparend "schlanke" Auslegung der Schwimmsattel-Scheibenbremse 1 ermöglicht betrifft die Abstützung der an den Bremsbelägen 6, 7 entstehenden Bremsumfangskräften. Der axial innenliegende erste Bremsbelag 6, der direkt von der Betätigungsvorrichtung 9 mit einer Zuspannkraft beaufschlagt wirkt mit L-förmigen seitlichen Ansätzen 26 mit den Halterarmen 13 zusammen. Analog zu den Vorsprüngen 14 des Schwimmsattels 3 ist auch zwischen den seitlichen Ansätzen 26 und den Halterarmen 13 jeweils ein Befestigungsabschnitt 21 einer Feder 20 ausgebildet. Am Befestigungsabschnitt 21 sind entsprechend Anlageflächen 22, 23 angeformt, um den ersten Bremsbelag 6 an den Halterarmen 13 in Achsrichtung 10 leicht verschiebbar zu führen und in Umfangsrichtung 12 abzustützen. Insgesamt werden die am ersten Bremsbelag 6 entstehenden Bremsumfangskraft unter Zwischenschaltung der Anlageflächen 22 direkt über den fahrzeugfesten Halter 2 abgeführt. Weiterhin weist die Feder 20 auch einen Federabschnitt 24 auf, um den ersten Bremsbelag 6 sowohl in Radialrichtung 11 als auch in Umfangsrichtung 12 klapperfrei gegenüber dem Halter 2 zu verspannen.

Die beiden Federn 15, 20 zur Führung und Abstützung sowie Befederung sowohl des ersten Bremsbelages 6 als auch des Schwimmsattels 3 können entweder als separate Einzelteile oder wie in den Figuren vorteilhaft als einteiliges kombiniertes Federelement ausgeführt werden. Dies vereinfacht die Handhabung. Insbesondere sind die Federn 15, 20 bzw. das einteilige Federelement jeweils über den Befestigungsabschnitt 16, 21 mittels eines Befestigungselementes 25 am Halterarm 13 befestigt. Als Befestigungselement 25 kann beispielsweise eine Schraube, ein Niet, ein Kerbnagel oder ähnliches verwendet werden.

Der axial außenliegende zweite Bremsbelag 7 liegt am außenliegenden Schwimmsattelschenkel 30 an. Dazu sind am zweiten Bremsbelag 7 axiale Vorsprünge 27 angeformt, die sich jeweils formschlüssig in zugehörige Aussparungen 32 innerhalb einer U-förmigen Ausnehmung 31 des Schwimmsattelschenkels 30 erstrecken. Diese Vorsprünge 27 mit Aussparungen 32 gestatten eine Abstützung der am zweiten Bremsbelag 7 auftretenden Bremsumfangkräfte über den Schwimmsattel 3. Bezogen auf den zweiten Bremsbelag verläuft der Kraftfluss bei der Übertragung der Bremsumfangkräfte während einer Bremsbetätigung ausgehend vom Bremsbelag 7 über den Schwimmsattel 3, die seitlichen Vorsprünge 14 und die Halterarme 13 hin zum fahrzeugfesten Halter 2. Insgesamt werden die an den beiden Bremsbelägen 6, 7 anliegenden Bremsumfangskräfte somit anteilig in den Halter 2 bzw. den Schwimmsattel 3 abgeführt. Dieser aufgeteilte Kraftfluss erlaubt eine optimierte, insbesondere gewichtssparende, Auslegung der einzelnen Komponenten der Schwimmsattel-Scheibenbremse.

## Patentansprüche

1. Schwimmsattel-Scheibenbremse für ein Kraftfahrzeug mit einem achsfesten Halter (2), mit einem mittels genau einer Bolzenführung (4) verschiebbar am Halter (2) gelagerten Schwimmsattel (3), der um eine Achse der Bolzenführung (4) schwenkbar angeordnet ist, wobei der Schwimmsattel (3) in Umfangsrichtung (12) am Halter (2) abgestützt ist, und mit beiderseits einer Bremsscheibe (5) angeordneten Bremsbelägen (6, 7), wobei ein erster Bremsbelag (6) am Halter (2) verschiebbar geführt sowie abgestützt und ein zweiter Bremsbelag (7) am Schwimmsattel (3) abgestützt ist, **dadurch gekennzeichnet, dass** am Halter (2) Halterarme (13) angeformt sind, welche die Bremsscheibe (5) axial überragen, und an einer axialen Außenseite des Schwimmsattels (3) Vorsprünge (14) angeformt sind, die mit den Halterarmen (13) zusammenwirken.

2. Schwimmsattel-Scheibenbremse nach Anspruch 1, **dadurch gekennzeichnet, dass** der Schwimmsattel (3) in Umfangsrichtung (12) zumindest einseitig mittels einer Feder (15) gegenüber dem Halter (2) verspannt ist.

3. Schwimmsattel-Scheibenbremse nach Anspruch 2, **dadurch gekennzeichnet, dass** an der Feder (15) Anlageflächen (17, 18) zur Führung und Abstützung des Schwimmsattels (3) ausgebildet sind.

4. Schwimmsattel-Scheibenbremse nach einem der Ansprüche 2-3, **dadurch gekennzeichnet, dass** die Feder (15, 20) den ersten Bremsbelag (6) gegenüber dem Halter (2) verspannt.

5. Schwimmsattel-Scheibenbremse nach einem der Ansprüche 2-4, **dadurch gekennzeichnet, dass** an der Feder (15, 20) Anlageflächen (22, 23) zur Führung und Abstützung des ersten Bremsbelages (3) am Halter (2) ausgebildet sind.

## Claims

1. Floating-caliper disc brake for a motor vehicle with a holder (2) fixed to a shaft, with a floating caliper (3) that is slidably mounted on the holder (2) by means of exactly one pin guide (4), the said floating caliper being arranged so as to be tiltable about an axis of the pin guide (4), with the floating caliper (3) being supported in a circumferential direction (12) at the holder (2), and with brake pads (6, 7) arranged on either side of a brake disc (5), with a first brake pad (6) being slidably guided and supported on the holder (2), while a second brake pad (7) is supported on the floating caliper (3),
**characterized in that** holder arms (13) are shaped at the holder (2) and project axially over the brake disc (5), and projections (14) are shaped at an axial outside surface of the floating caliper (3) and cooperate with the holder arms (13).

2. Floating-caliper disc brake as claimed in claim 1,
**characterized in that** the floating caliper (3) is clamped in relation to the holder (2) in the circumferential direction (12) at least on one side by means of a spring (15).

3. Floating-caliper disc brake as claimed in claim 2,
**characterized in that** the spring (15) is provided with abutment surfaces (17, 18) for guiding and supporting the floating caliper (3).

4. Floating-caliper disc brake as claimed in any one of claims 2 to 3,
**characterized in that** the spring (15, 20) clamps the first brake pad (6) in relation to the holder (2).

5. Floating-caliper disc brake as claimed in any one of claims 2 to 4,
**characterized in that** abutment surfaces (22, 23) are provided on the spring (15, 20) for guiding and supporting the first brake pad (3) on the holder (2).

## Revendications

1. Frein à disque à étrier flottant pour un véhicule automobile comportant un support (2) solidaire de l'essieu, un étrier flottant (3) monté coulissant sur le support (2) au moyen d'un seul guide à boulon (4) lequel étrier flottant est disposé pivotant autour d'un axe du guide à boulon (4), l'étrier flottant (3) étant soutenu sur le support (2) dans la direction périphérique (12), et comportant des garnitures de frein (6, 7) disposées des deux côtés d'un disque de frein (5), une première garniture de frein (6) étant guidée coulissante sur le support (2) et soutenue et une seconde garniture de frein (7) étant soutenue sur l'étrier flottant (3), **caractérisé en ce que** sur le support (2) sont formés des bras de support (13) qui dépassent axialement du disque de frein (5), et des saillies (14) sont formées sur un côté extérieur axial de l'étrier flottant (3), lesquelles coopèrent avec les bras de support (13).

2. Frein à disque à étrier flottant selon la revendication 1, **caractérisé en ce que** l'étrier flottant (3) est tendu dans la direction périphérique (12), au moins d'un côté, au moyen d'un ressort (15), par rapport au support (2).

3. Frein à disque à étrier flottant selon la revendication 2, **caractérisé en ce que** sur le ressort (15) sont réalisées des surfaces de contact (17, 18) pour le guidage et le soutien de l'étrier flottant (3).

4. Frein à disque à étrier flottant selon l'une des revendications 2 ou 3, **caractérisé en ce que** le ressort (15, 20) tend la première garniture de frein (6) par rapport au support (2).

5. Frein à disque à étrier flottant selon l'une des revendications 2 à 4, **caractérisé en ce que** sur le ressort (15, 20) sont réalisées des surfaces de contact (22, 23) pour le guidage et le soutien de la première garniture de frein (3) sur le support (2).
